# DEMANDE DE BREVET EUROPEEN

(11) **EP 3 822 912 A1**
(43) Date de publication de la demande: **19.05.2021**
(21) Numéro de dépôt: 20205985.3
(22) Date de dépôt: 05.11.2020
(51) Int. Cl.: G06T 7/215, G06T 7/11

(54) **SEGMENTATION D'IMAGES PAR FLOT OPTIQUE**

(30) Priorité: 14.11.2019 FR 1912647
(71) Demandeur: THALES, 92400 Courbevoie (FR)
(72) Inventeur: BERGERON, Cyril, 92622 GENEVILLIERS (FR); LE BARZ, Cédric, 91767 PALAISEAU (FR); LAVIELLE, Jeanne, 75015 PARIS (FR)
(74) Mandataire: Marks & Clerk France

(57) **Abrégé**

L'invention concerne un procédé de segmentation d'un flux vidéo (112) comprenant une succession d'images, comprenant :
-une première étape de classement des images du flux vidéo dans deux groupes d'images : un groupe de premières images (113) et un groupe de deuxièmes images (114),
-une deuxième étape de calcul d'une image segmentée (402) pour chacune des premières images,
-une troisième étape de calcul, pour chaque deuxième image respectivement, d'au moins un flot optique (412) par rapport à au moins une des premières images, dite image de référence, et
-une quatrième étape de calcul (413), pour chaque deuxième image, d'une image segmentée par application d'au moins un flot optique calculé à la troisième étape du procédé sur l'image segmentée calculée lors de la deuxième étape du procédé pour l'image de référence correspondante.

Le procédé concerne également un produit programme d'ordinateur associé, ainsi qu'un dispositif stockant ou exécutant le programme d'ordinateur.

## Description

### Domaine technique :

L'invention se situe dans le domaine du traitement de l'image et de la reconnaissance d'objets. Elle porte en particulier sur un procédé de segmentation d'un flux vidéo.

### Technique antérieure :

La segmentation d'images, aussi appelée labélisation ou segmentation sémantique, est une opération de traitement d'image consistant à regrouper les pixels d'une image afin de détourer des formes ou des objets, et éventuellement à attribuer à chacune des régions formées un label en rapport avec le type d'éléments qu'elles contiennent. La segmentation peut ainsi être utilisée pour détecter des objets particuliers. Plusieurs méthodes de segmentation sont connues de l'homme du métier, les plus anciennes étant basées sur des algorithmes utilisant la détection de contours, les plus récentes faisant appel à des intelligences artificielles.

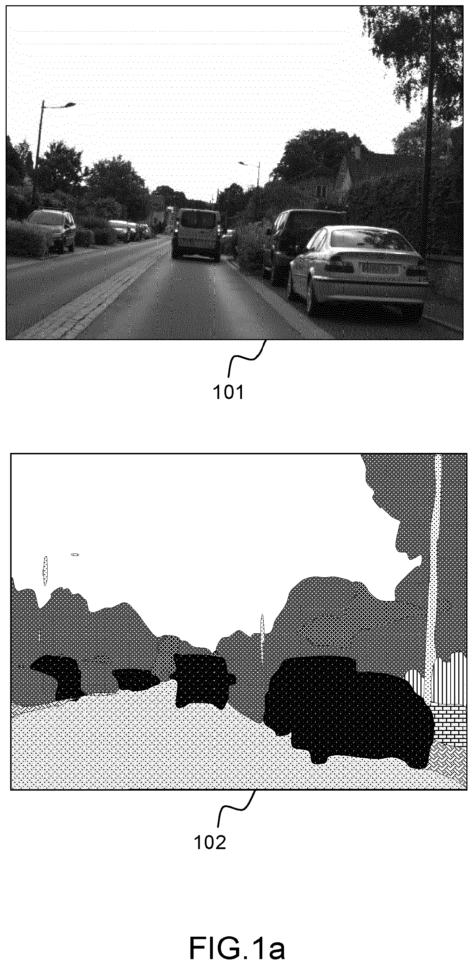

La figure 1a représente respectivement une image 101, et l'image équivalente obtenue après segmentation 102, les régions de l'image 102 pouvant alors être associées à des labels selon leur contenu (dans l'exemple : voiture, route, végétation, ciel,...).

La segmentation d'une image requiert une puissance de calcul importante, et présente donc un coût élevé. C'est encore pire lorsque la segmentation est appliquée à un flux vidéo, pour par exemple suivre le déplacement d'un objet dans une séquence d'images. En effet, la plupart des techniques de segmentation actuelles n'exploitent pas la redondance temporelle des objets situés dans des images successives : les images qui composent le flux vidéo sont segmentées indépendamment les unes des autres. La segmentation d'un flux vidéo demande alors une puissance de calcul très importante, en particulier pour un traitement en temps réel.

La segmentation image par image d'un flux vidéo présente en outre le problème de scintillement (en anglais « flickering ») des images segmentées. Ce problème provient de la segmentation réalisée peut varier d'une image à l'autre, même lorsque les images du flux vidéo sont très proches. Ce scintillement provoque une gêne visuelle, et peut être source d'erreurs pour les algorithmes en charge d'exploiter les images segmentées.
- Le phénomène de scintillement est accentué par le fait que les flux vidéo traités par les algorithmes de segmentation ne sont généralement pas issus directement du capteur optique, mais sont des flux vidéo compressées, et dont le taux de compression peut varier d'une image à l'autre. En effet, dans la plupart des standards actuels de compression vidéo, comme par exemple les standards MPEG-2, MPEG-4, H.264, H.265, le taux de compression appliqué n'est pas constant. Les flux vidéo se décomposent en deux types d'images :
   - les images dites « intra », ou images de référence, codées intrinsèquement et généralement moins compressées, donc de bonne qualité, et
   - les images « prédites », ou relatives, intercalées entre les images intra, fortement compressées et obtenues en mesurant les variations par rapport aux images intra. Le taux de compression pour ces images est alors fortement lié aux mouvements entre les images.

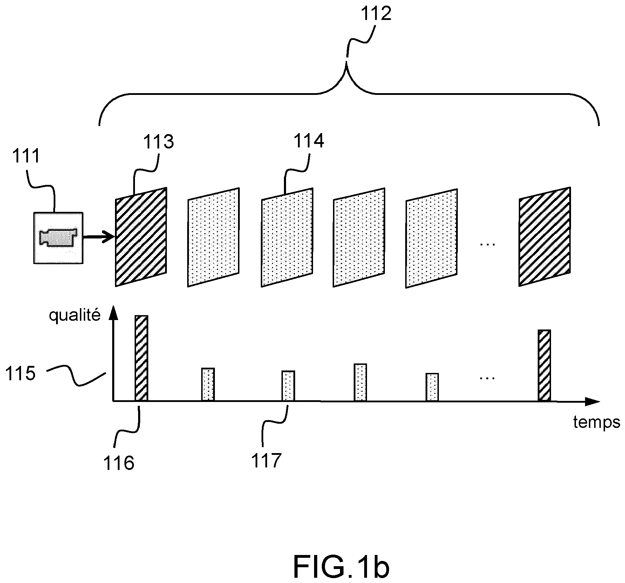

La figure 1b représente schématiquement la composition d'un flux vidéo compressé.

La caméra 111, par exemple une webcam, est configurée pour acquérir un flux vidéo, le compresser selon un standard donné, puis pour le transmettre à un dispositif de traitement de l'image en charge de réaliser la segmentation du flux vidéo. Le dispositif décompresse le flux vidéo pour recomposer les différentes images 112 qui le constituent. Parmi ces images sont les images intra 113, représentées dans la suite de la demande en hachures, et les images prédites 114, représentées dans la suite de la demande en pointillés. Le graphique 115 donne la qualité associée à chacun des images du flux vidéo.

On observe que les images intra 113, codées intrinsèquement sans lien temporel avec les autres images, ont généralement un niveau de qualité 116 élevé, tandis que les images prédites 114, codées en relatif par rapport aux images intra, ont un niveau de qualité 117 inférieur.

La segmentation des images dont les niveaux de qualité varient au cours du temps amplifie les variations sur le résultat de la segmentation, ce qui accentue d'autant l'effet de scintillement.

Pour résoudre ce problème, les techniques les plus avancées cherchent à prendre en compte à la fois l'aspect spatial (c'est-à-dire la segmentation de chaque image prise indépendamment) et l'aspect temporel (c'est-à-dire les liens entre les images consécutives) en alimentant des algorithmes d'intelligence artificielle par des paquets d'images consécutives. Cependant, ce faisant, le temps d'apprentissage et d'inférence de l'intelligence artificielle est beaucoup plus élevé. La puissance de calcul, et donc le coût du matériel, augmente alors, tout particulièrement lorsqu'il s'agit de réaliser un traitement en temps réel des flux vidéo.

L'invention vise à atténuer l'effet de scintillement dans les flux vidéo segmentés par un procédé de segmentation d'un flux vidéo ayant une complexité de calcul maitrisée. Le procédé décrit est basé sur un sous-échantillonnage de l'opération de segmentation et le calcul d'un flot optique, représentant le lien entre les différents pixels des images. Le flot optique est alors appliqué non pas aux images du flux vidéo, mais aux images segmentées, pour segmenter l'ensemble des images du flux vidéo.

### Résumé de l'invention :

A cet effet, la présente invention décrit un procédé de segmentation d'un flux vidéo comprenant une succession d'images. Le procédé comprend :
- une première étape de classement des images du flux vidéo dans deux groupes d'images : un groupe de premières images et un groupe de deuxièmes images, à partir d'un ou plusieurs critères parmi : un rapport signal à bruit de l'image, une mesure d'une netteté des contours de l'image et un pas de quantification associé à l'image,
- une deuxième étape de calcul d'une image segmentée pour chacune desdites premières images,
- une troisième étape de calcul, pour chaque deuxième image respectivement, d'au moins un flot optique par rapport à au moins une des premières images, dite image de référence, et
- une quatrième étape de calcul, pour chaque deuxième image, d'une image segmentée par application d'au moins un flot optique calculé à la troisième étape du procédé sur l'image segmentée calculée lors de la deuxième étape du procédé pour l'image de référence correspondante.

Selon un mode de réalisation avantageux, plusieurs flots optiques peuvent être calculés lors de la troisième étape pour une même deuxième image, à partir de plusieurs images de référence. La quatrième étape comprend alors la segmentation de la deuxième image par application des différents flots optiques calculés, assorti d'une sous-étape de décision pour les pixels segmentés différemment par application des différents flots optiques.

Dans un mode de réalisation, le flux vidéo est compressé et décompressé selon un standard de compression vidéo utilisant un procédé dans lequel certaines images, dites intra, sont codées intrinsèquement, et d'autres images, dites prédites, sont codées par mesure du flot optique avec l'image précédente.

Ce standard de compression peut être choisi parmi les formats MPEG-2, MPEG-4, H.264 et H.265.

Dans un mode de réalisation, la deuxième étape de segmentation est mise en œuvre par une intelligence artificielle.

Dans un mode de réalisation, un label est associé à chacune des régions des images segmentées.

L'invention décrit également un produit programme d'ordinateur configuré pour implémenter le procédé de segmentation d'un flux vidéo décrit, ainsi qu'un dispositif configuré pour l'exécuter, et un support utilisable par ordinateur stockant le produit programme d'ordinateur.

### Brève description des figures :

L'invention sera mieux comprise et d'autres caractéristiques, détails et avantages apparaîtront mieux à la lecture de la description qui suit, donnée à titre non limitatif, et grâce aux figures annexées qui suivent, données à titre d'exemple, parmi lesquelles :
- La figure 1a représente une image et le résultat obtenu par segmentation de cette image ;
- La figure 1b représente schématiquement la composition d'un flux vidéo compressé ;
- La figure 2 représente les étapes d'un mode de réalisation d'un procédé de segmentation d'un flux vidéo selon l'invention ;
- La figure 3 illustre le résultat du calcul d'un flot optique entre deux images ;
- La figure 4 illustre un mode réalisation d'un procédé de segmentation d'un flux vidéo selon l'invention.

Des références identiques sont utilisées dans des figures différentes lorsque les éléments désignés sont identiques.

### Description détaillée :

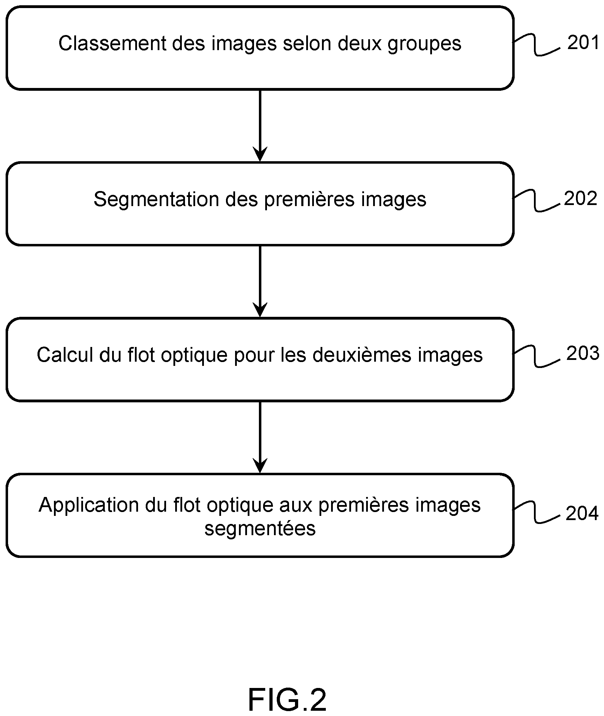

La figure 2 représente les étapes d'un mode de réalisation d'un procédé de segmentation d'un flux vidéo selon l'invention.

Le procédé s'applique à un flux vidéo, c'est-à-dire une succession d'images, qu'il s'agisse d'un flux vidéo ayant au préalable été compressé et décompressé, ou d'un flux vidéo brut, n'ayant pas été compressé.

Le procédé selon l'invention comprend une première étape 201 de classement des images du flux vidéo selon deux groupes : un premier groupe comprenant des premières images, et un deuxième groupe comprenant des deuxièmes images. En fonction du mode de réalisation, ce classement peut être fait :
- en sélectionnant comme premières images une image toutes les N images du flux vidéo, avec N un nombre entier supérieur à 1. Ce mode de réalisation est adapté en particulier lorsque le flux vidéo est un flux d'images brutes, c'est-à-dire n'ayant pas été compressées et décompressées, ces images ayant alors toutes le même niveau de qualité,
- en sélectionnant comme premières images les images ayant le niveau de qualité le plus élevé. La qualité des images peut par exemple être déterminée par un critère obtenu par la mesure d'un rapport signal à bruit, la mesure d'une netteté des contours, ou lorsqu'il s'agit d'un flux compressé puis décompressé, en récupérant dans le flux compressé le pas de quantification associé aux différentes images. Le critère peut également combiner plusieurs des éléments récités. La sélection des premières images peut être faite par exemple en traitant le flux vidéo par blocs d'images et en isolant celles ayant les niveaux de qualité les plus importants dans le bloc, en positionnant par exemple un seuil minimum de netteté, ou par tout autre méthode équivalente,
- en sélectionnant comme premières images les images « intra » lorsque le flux vidéo a été compressé et décompressé en utilisant un standard de compression compressant intrinsèquement certaines images, dites « intra », et codant les autres images, dites « prédites », en considérant les déplacement des pixels par rapport aux images intra. Les images « intra » bénéficient en effet dans ce cas d'un niveau de qualité supérieur à celui des images « prédites ».

Le procédé selon l'invention comprend une étape 202 de segmentation des premières images. Cette étape de segmentation se fait selon les méthodes connues de l'homme du métier, et peut avantageusement faire appel à une intelligence artificielle. Elle se distingue de l'art antérieur où la segmentation est réalisée image par image, en ce que la segmentation n'est appliquée qu'à un nombre limité d'images, réduisant ainsi le nombre de calculs requis pour la segmentation elle-même, et donc le coût d'implémentation.

Un label désignant un type d'objet peut être attribué aux différentes régions des premières images segmentées. On connait par exemple à cet effet la méthode de segmentation sémantique dite de « Fully Convolutional Network ».

Le procédé selon l'invention comprend une troisième étape 303 de calcul d'un flot optique pour chacune des secondes images. Les algorithmes de flot optique, ou flux optique, sont des algorithmes bien connus en traitement de l'image, qui visent à dresser une cartographie des pixels d'une image par rapport aux pixels d'une autre image, dite de référence, en décrivant un vecteur par pixel. Ainsi, dans le cas d'un plan statique où les deux images sont identiques, les vecteurs du flot optique sont nuls. Dans le cas d'une image avec peu de mouvements, les vecteurs peuvent être non entiers (cas d'un déplacement sub-pixelique).

De nombreuses méthodes de calcul d'un flot optique sont connues de l'homme du métier, comme par exemple la méthode de Lucas-Kanade. Le flot optique n'est cependant pas nécessairement présent dans les flux de données compressés car les standards de compression les plus récents mesurent les mouvements par groupes de pixels, et non pixel par pixel, afin d'augmenter le taux de compression.

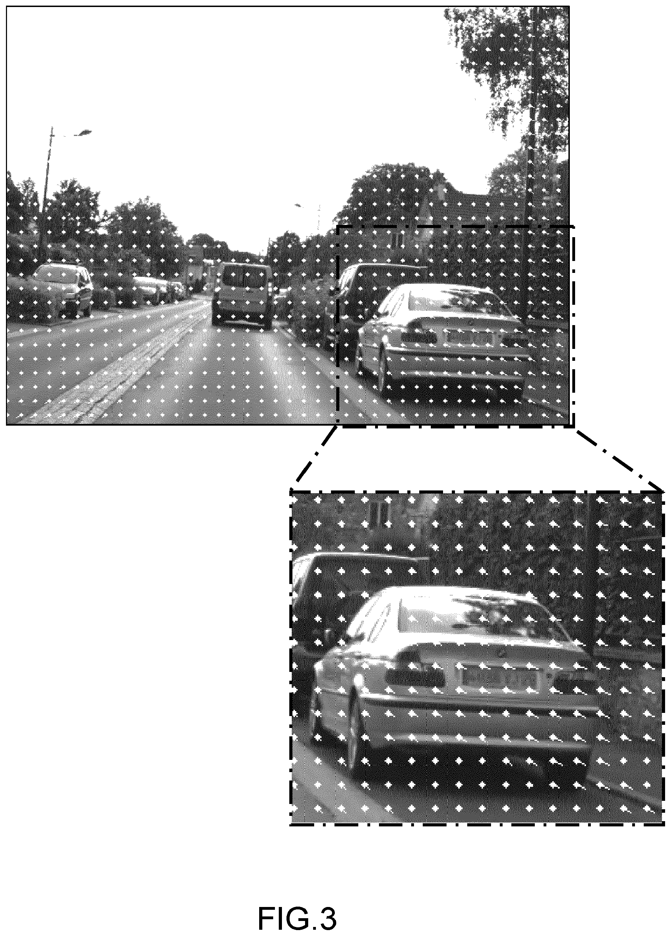

La figure 3 représente, sur une même image, l'image de référence 101 et les vecteurs obtenus par l'application d'un flot optique l'image de référence. Afin que cette image soit lisible, les vecteurs n'ont été représentés que pour un nombre limité de pixels, et un zoom a été réalisé sur la partie située en bas à droite de l'image. Dans la représentation de la figure 3, des symboles indiquent la position initiale et la position finale des pixels considérés.

La troisième étape 203 du procédé selon l'invention consiste donc à calculer le flot optique entre chaque deuxième image et une première image prise comme référence. Le flot optique pour une deuxième image peut être calculé en prenant comme image de référence n'importe quelle première image. Cependant, de manière à limiter les mouvements entre deux images, l'image de référence choisie pour une deuxième image donnée est de préférence :
- la première image qui la précède,
- la première image la plus proche temporellement, c'est-à-dire la première image qui la précède ou la première image qui la suit en fonction de leur écart avec la deuxième image,
- la première image la plus proche spatialement, c'est-à-dire la première image pour laquelle les mouvements sont les plus faibles, ou
- la première image présentant le niveau de qualité le plus élevé parmi la première image qui la précède et la première image qui la suit.

Avantageusement, plusieurs flots optiques peuvent être calculés pour une même deuxième image, à partir de plusieurs premières images de référence, comme par exemple un flot optique calculé à partir de la première image précédant la deuxième image considérée, et un deuxième flot optique calculé à partir de la première image qui la suit. Ce mode de réalisation permet d'améliorer la qualité de la segmentation des secondes images, réalisée dans l'étape suivante.

En prenant comme images de référence des premières images uniquement, la mesure du flot optique est très précise puisqu'elle se base sur les images de meilleure qualité.

Enfin, le procédé selon l'invention comprend une étape 204 de calcul d'une image segmentée correspondant à chaque deuxième image. Le procédé propose pour cela d'appliquer les déplacements de pixels calculés par le flot optique non pas aux premières images, mais aux premières images segmentées calculées lors de la deuxième étape. En effet, le flot optique comprenant les déplacements de tous les pixels entre une première image et une deuxième image, il peut être appliqué de manière identique à la première image ou au résultat de la segmentation de la première image. Les labels affectant les régions de pixels peuvent être ajustés en suivant le flot optique.

Les premières images segmentées et les deuxièmes images segmentées permettent de produire un flux vidéo segmenté, obtenu par segmentation des premières images uniquement et par application d'un flot optique aux premières images segmentées. Le phénomène de scintillement du flux vidéo segmenté est réduit par rapport à l'état de l'art car :
- l'utilisation du flot optique entre les premières et les deuxièmes images fait un lien temporel entre ces images, qui supprime le phénomène de scintillement entre chaque première image segmentée et les deuxièmes images obtenues à partir de cette première image segmentée,
- en ne réalisant la segmentation que sur un sous-ensemble d'images, l'effet de scintillement est diminué d'un facteur correspondant au facteur de sous-échantillonnage,
- en appliquant la segmentation aux images ayant les niveaux de qualité les plus élevés, le phénomène de scintillement entre premières images est réduit.

Lorsque la troisième étape comprend le calcul de plusieurs flots optiques pour une même deuxième image, les différentes reconstructions par flot optique peuvent conduire à des résultats différents pour le même pixel d'une deuxième image segmentée. Dans ce cas, une décision doit être prise afin de déterminer à quelles zones appartiennent les pixels conflictuels. Cette décision peut par exemple être prise :
- par rapport aux pixels voisins déjà reconstruits,
- en choisissant la labélisation ayant la probabilité de vraisemblance la plus importante dans les premières images de référence (en effet, lors de l'étape de segmentation 202, une probabilité de vraisemblance est calculée pour chaque pixel),
- à partir d'un critère simple, comme par exemple en classant les labels selon un classement arbitraire des plus probables.

Le procédé décrit peut être implémenté sur n'importe quelle machine de calcul, tel qu'un processeur, un processeur de signal numérique (plus connu sous le sigle anglais de DSP pour « Digital Signal Processor »), ou un circuit spécialisé tel qu'un ASIC (acronyme anglais pour « Application Specific Integrated Circuit ») ou un FPGA (sigle anglais pour « Field-Programmable Gate Array »).

Les calculs, et en particulier l'étape de sélection des premières images, peuvent être réalisés en considérant le flux vidéo dans son ensemble, mais peuvent également être appliqués en considérant les images du flux vidéo par blocs successifs, pour un traitement temps réel. Les traitements de segmentation et de calcul du flot optiques sont indépendants et peuvent être parallélisés pour optimiser la vitesse d'exécution du procédé.

Le procédé selon l'invention peut prendre la forme d'un produit programme d'ordinateur accessible à partir d'un support utilisable ou lisible par ordinateur, fournissant un code de programme destiné à être utilisé par un ordinateur ou un système d'exécution d'instructions, ou en liaison avec celui-ci. Un support utilisable ou lisible par ordinateur peut être n'importe quel appareil pouvant contenir, stocker, communiquer, propager ou transporter le programme en vue d'une utilisation par ou en relation avec le système, l'appareil ou le dispositif d'exécution d'instructions. Le support peut être un système (ou un appareil ou un dispositif) électronique, magnétique, optique, électromagnétique, infrarouge ou semi-conducteur, ou un support de propagation. L'invention porte également sur un dispositif, tel qu'un ordinateur, un FPGA, un ASIC, un DSP, configuré pour exécuter le produit programme ordinateur selon l'invention.

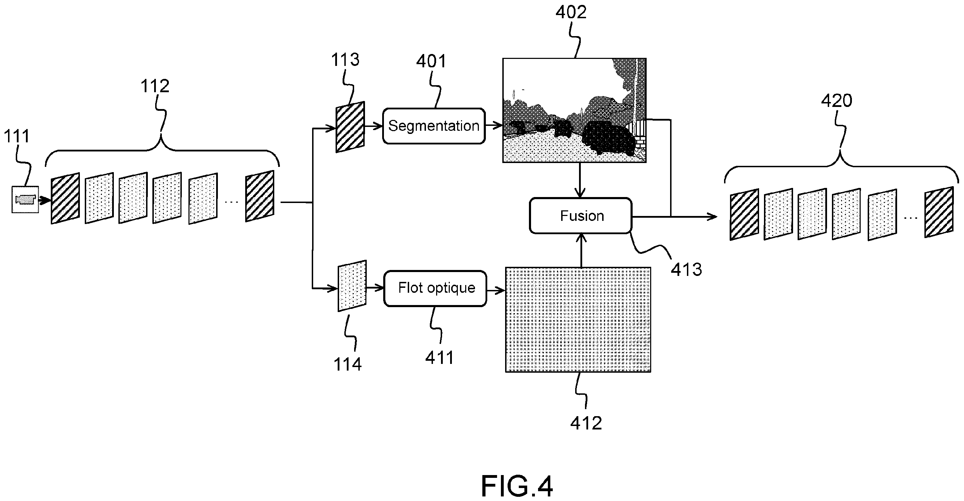

La figure 4 illustre un mode réalisation d'un procédé de segmentation d'un flux vidéo selon l'invention.

L'exemple s'applique à un flux vidéo 112 compressé et décompressé selon un standard de compression quelconque considérant deux types d'images, les images « intra » telles que les images 113 de la figure 1b, et les images « prédites », telles que les images 114 de la figure 1b. Néanmoins, le procédé s'appliquerait de manière identique en déterminant les deux groupes d'images à partir de leur qualité pour un flux compressé ou de leur position pour un flux vidéo brut.

Les images « intra » 113 sont sélectionnées pour composer le premier groupe d'images, tandis que les images « prédites » 114 composent le deuxième groupe.

Un algorithme de segmentation 401 est appliqué sur les images intra, pour générer une image intra segmentée 402. Un algorithme de calcul du flot optique 411 est appliqué à chaque deuxième image, permettant de calculer les vecteurs de déplacement de chaque pixel de la deuxième image par rapport aux pixels de l'une des premières images. Lorsque le flux vidéo 112 a été compressé par un standard de compression implémentant le flot optique, celui-ci peut ne pas être recalculé et être récupéré dans le flux vidéo compressé.

Le calcul de flot optique résulte en une cartographie 412 des déplacements de chaque pixel de la seconde image par rapport à une première image.

Enfin, les déplacements de pixels calculés par l'algorithme de flot optique sont appliqués en 413 à l'image segmentée obtenue pour la première image utilisée comme référence pour le flot optique. Le résultat de l'application du flot optique à une image segmentée correspond à la segmentation de la deuxième image.

A partir des premières images segmentées et des deuxièmes images segmentées, un flux vidéo segmenté 320, correspondant au flux vidéo 112, peut être reconstitué.

Le procédé selon l'invention permet donc de segmenter un flux vidéo, et se différencie de l'état de l'art en ce que :
- la segmentation n'est appliquée qu'à un nombre limité d'images, les autres images étant traitées par l'application d'un flot optiques aux images segmentées, ce qui a pour effet de réduire le scintillement, mais également le coût de calcul, le calcul d'un flot optique étant moins couteux qu'un segmentation ;
- la segmentation n'est appliquée qu'aux images de meilleure qualité, ce qui permet d'optimiser les résultats de la segmentation des images et d'accélérer le processus de segmentation ;
- il tient compte à la fois du niveau de qualité des images, et du lien temporel pouvant exister entre les images ;
- il est compatible de l'ensemble des algorithmes connus de segmentation d'image et de calcul d'un flot optique.

## Revendications

1. Procédé de segmentation d'un flux vidéo (112), ledit flux vidéo comprenant une succession d'images, le procédé comprenant :
- une première étape (201) de classement des images du flux vidéo dans deux groupes d'images: un groupe de premières images (113) et un groupe de deuxièmes images (114), à partir d'un ou plusieurs critères parmi : un rapport signal à bruit de l'image, une mesure d'une netteté des contours de l'image et un pas de quantification associé à l'image,
- une deuxième étape (202) de calcul d'une image segmentée (402) pour chacune desdites premières images,
- une troisième étape (203) de calcul, pour chaque deuxième image respectivement, d'au moins un flot optique (412) par rapport à au moins une des premières images, dite image de référence, et
- une quatrième étape (204) de calcul (413), pour chaque deuxième image, d'une image segmentée par application d'au moins un flot optique calculé à la troisième étape du procédé sur l'image segmentée calculée lors de la deuxième étape du procédé pour l'image de référence correspondante.

2. Procédé de segmentation d'un flux vidéo selon la revendication 1, dans lequel le flux vidéo est compressé et décompressé selon un standard de compression vidéo utilisant un procédé dans lequel certaines images, dites intra, sont codées intrinsèquement, et d'autres images, dites prédites, sont codées par mesure du flot optique avec l'image précédente.

3. Procédé de segmentation d'un flux vidéo selon la revendication 2, dans lequel le standard de compression est choisi parmi les formats MPEG-2, MPEG-4, H.264 et H.265.

4. Procédé de segmentation d'un flux vidéo selon l'une des revendications précédentes, dans lequel la deuxième étape de segmentation est mise en œuvre par une intelligence artificielle.

5. Procédé de segmentation d'un flux vidéo selon l'une des revendications précédentes, dans lequel un label est associé à chacune des régions des images segmentées.

6. Programme d'ordinateur comprenant des instructions de code de programme pour l'exécution des étapes du procédé de segmentation d'un flux vidéo selon l'une des revendications précédentes lorsque ledit programme est exécuté sur un ordinateur.

7. Dispositif configuré pour exécuter un produit programme d'ordinateur selon la revendication 6.

8. Support d'enregistrement lisible par un ordinateur sur lequel est enregistré un programme d'ordinateur comprenant des instructions de code de programme pour l'exécution des étapes du procédé de segmentation d'un flux vidéo selon l'une des revendications 1 à 5.
